**Europäisches Patentamt**

**European Patent Office**

**Office européen des brevets**

(19)

(11) Publication number: **0 094 258**
**B1**

(12) ## EUROPEAN PATENT SPECIFICATION

(45) Date of publication of patent specification: **26.11.86**

(21) Application number: **83302670.1**

(22) Date of filing: **11.05.83**

(51) Int. Cl.⁴: **B 01 D 25/14, B 02 C 18/14,**
**B 02 C 18/22, B 01 J 2/00,**
**B 23 D 25/14**

(54) **Granulators.**

(30) Priority: **12.05.82 GB 8213779**

(43) Date of publication of application:
**16.11.83 Bulletin 83/46**

(45) Publication of the grant of the patent:
**26.11.86 Bulletin 86/48**

(84) Designated Contracting States:
**AT BE CH DE FR GB IT LI LU NL SE**

(56) References cited:
**FR-A-2 038 405**
**FR-A-2 327 819**
**US-A-3 017 797**

(73) Proprietor: **BICC Public Limited Company**
**21, Bloomsbury Street**
**London, WC1B 3QN (GB)**

(72) Inventor: **Harvey, Peter**
**4 Granard Avenue**
**Putney London S.W. 15 (GB)**
Inventor: **Nieora, Marian Karol**
**3 Kirn Road**
**London W. 13 (GB)**

(74) Representative: **Poole, Michael John et al**
**BICC plc Patents and Licensing Department**
**38 Ariel Way Wood Lane**
**London W12 7DX (GB)**

Courier Press, Leamington Spa, England.

## Description

This invention relates to granulators for comminuting sheet materials, and especially (but not exclusively) for comminuting copper cathodes and sheets of other metals of high strength and ductility.

Granulators that can be used for this purpose (GB—A—2 021 974) comprise a rotor bearing a number of cutting blades that cooperate with at least one fixed blade to shear the sheet material repeatedly until it is reduced to particles small enough to pass through a screen forming part of a housing which encloses the rotor.

To ensure acceptance of sheet materials by this type of granulator, they must be fed in a continual manner across the fixed blade (or across one of the fixed blades) so that sheared pieces neither too thin nor of excessive size are received by the interior of the rotor. Currently a simple slot in the housing is used to admit the sheets, but this is not satisfactory as the centrifugal and other effects of the rotor continually subject the whole interior of its housing to bombardment with particles of many shapes and sizes travelling at high speeds. Even if the sheet material is of uniform thickness (which copper cathodes, for example, are not) it is impossible to make the entry slot fit it so closely that none of the particles can get between the sheet material and the slot walls, bearing in mind the intense vibrations which the granulator generates. If the clearance is small, this leads to jamming whereas if the clearance is enlarged a significant fraction of the material may be lost through it, requiring screening for the safety of personnel and detrimentally affecting the economics of the process, and at the same time it becomes difficult to control the feed of the sheet material as the trailing end of one piece thereof may be over-ridden by the leading end of the next, or by any implement used to push it, leading to jamming also.

US—A—3 017 797 discloses a rotary shear in which scrap metal in the form of girders, rods, sheet etc., is fed across a horizontal surface and is held down by a spring-biased flap to prevent the residue of the feed pieces recoiling from the impact of the rotating blade. Such a shear, not having a screen, does not retain any of the cut pieces and so the problem solved by the present invention does not arise.

The granulator in accordance with the present invention is distinguished by the use, for the purpose of avoiding both the escape of particles and the jamming of the feed thereby, of an entry slot bounded on one side by a fixed bearing surface aligned with the fixed blade (or that fixed blade at which the initial cut is to be made) and on the other side by at least one member which is resiliently supported and is biassed towards the bearing surface.

The fixed bearing surface will in most cases define the underside of the slot, and our present preference is that it should be a horizontal surface, though it might slope in either direction (but more especially downwards towards the rotor so as to increase the proportion of particles that fall back into the machine).

Except for the area nearest the rotor, it is preferably grooved or perforated to provide an escape route for stray particles.

We prefer that the other side of the slot is bounded by a single member. The use of multiple members has possible value if the sheet material varies in width and/or varies in thickness across its width, but would be associated with some difficulty in forming non-jamming leakproof joints between the members.

The invention relies in part on oscillation of the biassed member(s) consequent on the general vibration of the machine, and the optimum biassing force is not the greatest that is consistent with allowing the sheet material to enter; it will need to be determined empirically for different granulator sizes and designs and for particular sheet materials. Spring biassing is preferred as it resists severe vibration better than a pneumatic system involving pipe connections would do.

It is desirable but not essential that the range of movement of the resiliently supported member is such that, in the absence of any sheet material in the slot, it can move into contact with the abutment surface, so closing the slot completely.

Preferably the resiliently biassed member is pivotted on an axis parallel to the length of the slot, but a sliding movement is not excluded. In any case it is desirable, to minimise trapping of particles and eliminate any risk of tightening on the advancing sheet, that the direction of movement is such that in moving away from the bearing surface it also moves nearer to the rotor axis and vice versa.

The invention will now be further described by way of example with reference to the acccompanying drawings in which:—

Figure 1 is a partly diagrammatic fragmentary cross-section of a development granulator in accordance with the invention;

Figure 2 is a corresponding view of a prototype production granulator, and

Figure 3 is a side view of one half of the granulator in Figure 2.

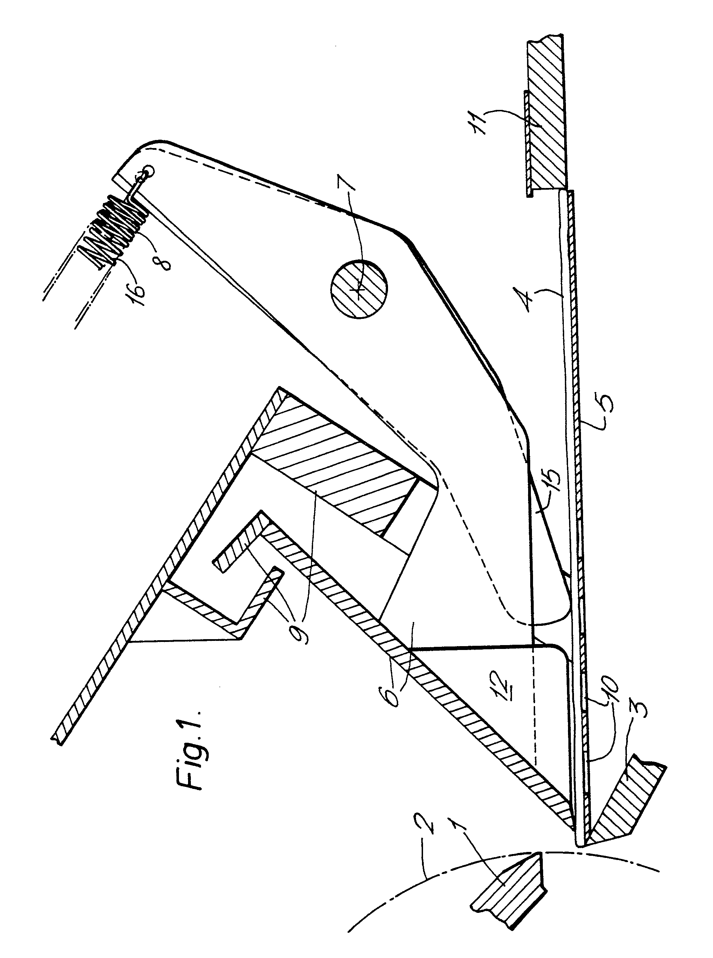

Referring first to Figure 1, the development granulator has a series of blades 1 carried on a heavy rotor and moving in a circular path 2. The blades are not continuous from end to end of the rotor, but are made of a number of straight longitudinally extending segments staggered around the periphery to reduce the length of cut being made at any one time. These revolving blades co-operate with a single fixed blade 3 across which the sheet material 4 to be granulated is fed. The rotor is enclosed by a stout casing, most of which is not shown, and the lower part of the casing is formed by a perforated mesh screen curved and positioned just clear of the rotor, through which the granules produced pass when they are small enough to do so.

In accordance with the invention, one side (the underside) of the entry slot into the granulator is formed by a fixed bearing surface, namely support table 5, and its other (upper) side by a member 6 which is mounted on a pivot 7 and biassed in an anti-clockwise direction about the pivot by a number of springs 8 spaced along the length of the machine. It will be noted that the position of the pivot is such that movement of the sheet material 4 into the granulator tends to raise the left hand end of the member 6, providing a self-clearing action. A series of baffles 9 is provided to minimise the number of particles escaping round the upper end of the member 6; similar precautions are preferably taken at the ends of the machine.

Openings 10 through the support table 5 allow for the escape of any small particles that may get access between the table and the sheet material 4, for example because the underside of the sheet is locally or generally concave, or as a result of vibration.

In the absence of the sheet material 4, the springs 8 bring the working end of the member 6 down into contact with the end of the table 5, so that even in this condition there is relatively little risk of particles being thrown out without having been deflected a number of times and lost energy. Sheet material 4 placed on a table 5 and pushed forward by the pusher 11 automatically opens a slot for the entry of the sheet and which is only of the thickness necessary to receive the particular sheet (or the thickest part along the relevant section at any particular time). Lugs 12 spaced along the outside of the member 6 confine the sheet material 4 to prevent it from rotating in an anticlockwise direction as seen in the drawing when struck by the rotating blades 1. Additionally, a series of levers 15, also pivotted at 7, are biassed by springs 16 to urge the sheet 4 downwards on the surface 5 for increased grip and reduced vibration.

Experience with this development machine, which is a modified Cumberland granulator model 37 and has a rotor 355 mm in diameter and 921 mm long weighing 360 kg and driven by a 150 kW (mechanical) electrical induction motor and having three revolving blades shows that copper cathode up to 500 mm wide and 12 mm thick can be successfully granulated using a spring biassing force of 1820 Newtons per metre of slot length.

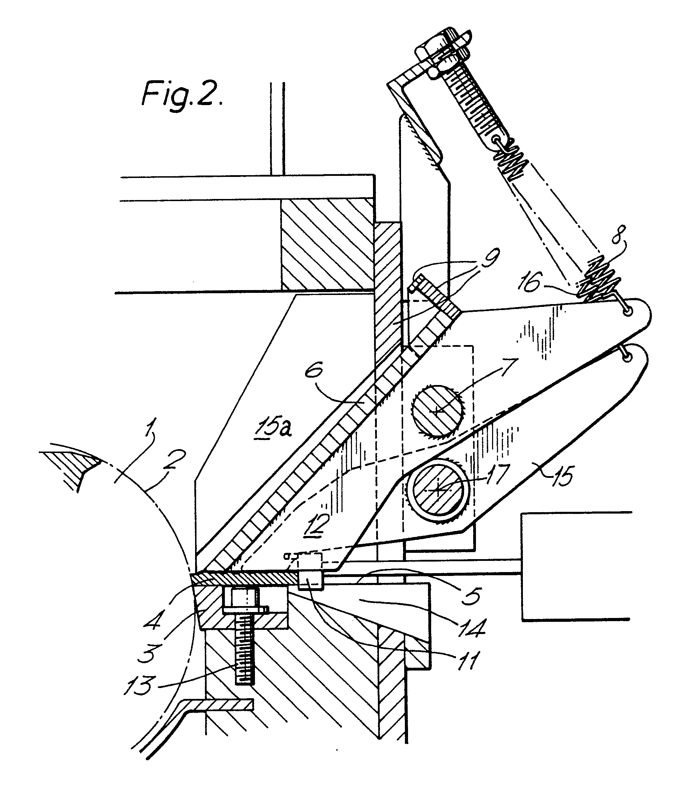

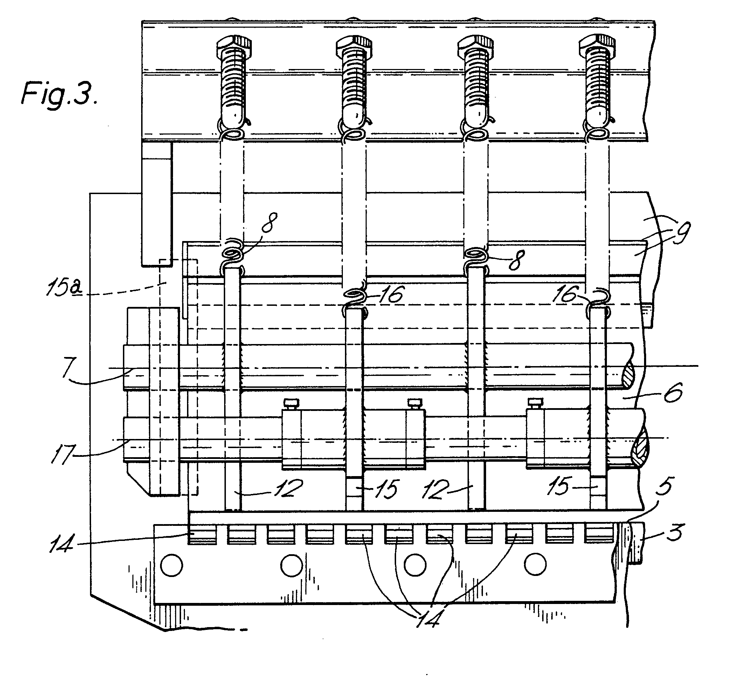

The granulator of Figures 2 and 3 is similar in basic concept to that of Figure 1, and equivalent parts have been given the same reference numerals. Only features that differ in some significant way will be described separately.

The bearing surface 5, though less clearly seen than Figure 1, is still basically a flat horizontal surface extending up to the fixed knife 3. It is however recessed to receive the fixng and adjusting screws 13 for the fixed blade 3 and in addition, instead of the openings 10 of Figure 1, it has a number of tapered longitudinal slots 14 through which granules that otherwise might be trapped can escape; these slots also allow the pusher member 11 to extend below the level of the bottom of the sheet material 4 to be pushed, so further reducing the risk of over-riding and jamming.

In this design of machine, additional baffles 15a are provided on the inside face of the end of the granulator housing to restrict access of material being granulated to the clearance between the member 6 and the end plates.

Another minor difference is that the gripper levers 15 have a separate pivot 17.

The invention includes a process distinguished by the use of the granulator defined, and the protection claimed extends (Article 64(2) EPC) to the direct product of that process.

## Claims

1. A granulator for comminuting sheet materials comprising a rotor bearing a number of cutting blades (1) that co-operate with at least one fixed blade (3) to shear the material (4) repeatedly until it is reduced to particles small enough to pass through a screen forming part of a housing which encloses the rotor characterised by the use, for the purpose of avoiding the escape of particles and the jamming of the feed thereby, of an entry slot for the sheet material which is bounded on one side by a fixed bearing surface (5) aligned with the said fixed blade and on the other side by at least one member (6) which is resiliently supported and is biassed towards the bearing surface.

2. A granulator as claimed in Claim 1 in which the fixed bearing surface (5) defines the underside of the slot.

3. A granulator as claimed in Claim 2 in which the fixed bearing surface (5) is horizontal.

4. A granulator as claimed in Claim 2 or Claim 3 in which the fixed bearing surface (5) is grooved or perforated (as at 10).

5. A granulator as claimed in any one of the preceding claims in which the resiliently biassed member (6) is free to move in a direction such that as it moves away from the bearing surface (5) it also moves nearer the rotor axis.

6. A granulator as claimed in any one of the preceding claims in which the resiliently biassed member (6) is pivotted on an axis parallel to the length of the slot.

7. A process for granulating sheet material distinguished by the use of a granulator claimed in any one of the preceding claims.

## Patentansprüche

1. Granuliervorrichtung zum Zerkleinern von Plattenmaterial, die einen Rotor aufweist, der eine Anzahl von Schneidmessern (1) trägt, die mit wenigstens einem festen Messer (3) zusammenarbeiten, um das Plattenmaterial (4) wiederholt durchzutrennen, bis es auf so ausreichend kleine Teilchen zerkleinert Ist, daß diese durch ein Sieb gehen, das einen Teil des Gehäuses bildet, das den Rotor umgibt, dadurch gekennzeichnet, daß zum Vermeiden sowohl des Austretens der Teilchen als auch des Verstopfens durch das Aufgabematerial ein Eintrittsschlitz für das Plattenmaterial vorgesehen ist, der auf einer Seite durch eine feste Lagerfläche (5) die mit dem festen Messer fluchtet und auf der anderen Seite durch wenigstens ein Element (6) begrenzt ist, das federnd nachgiebig gelagert und in Richtung auf die Lagerfläche vorbelastet ist.

2. Granuliervorrichtung nach Anspruch 1, bei der die feste Lagerfläche (5) die Unterseite des Schlitzes bildet.

3. Granuliervorrichtung nach Anspruch 2, bei der die feste Lagerfläche (5) horizontal ist.

4. Granuliervorrichtung nach Anspruch 2 oder 3, bei der die feste Lagerfläche (5) mit Nuten versehen oder perforiert ist (wie bei 10).

5. Granuliervorrichtung nach einem der vorangehenden Ansprüche, bei der das federnd vorbelastete Element (6) sich frei in eine Richtung bewegen kann, so daß es sich bei einer Bewegung von der Lagerfläche (5) weg auch näher zur Rotorasche bewegt.

6. Granuliervorrichtung nach einem der vorangehenden Ansprüche, bei der das federnd vorbelastete Element (6) um eine Achse parallel zur Länge des Schlitzes schwenkbar ist.

7. Verfahren zum Granulieren von Plattenmaterial, das sich durch die Verwendung einer Granuliervorrichtung unterscheidet, die in einem der vorangehenden Ansprüche beansprucht ist.

**Revendications**

1. Granulateur pour pulvériser des matériaux en feuilles, comprenant un rotor portant un certain nombre de lames de coupe (1), qui agissent en commun avec au moins une lame fixe (3) pou cisailler le matériau en feuilles (4), de façon répétitive, jusqu'à ce qu'il soit réduit en particules assez petites pour pouvoir passer au travers d'un tamis, qui fait partie d'un carter, lequel enveloppe le rotor; caractérisé par l'emploi, dans le but d'éviter à la fois la fuite des particules et le blocage de l'alimentation par ces dernières, d'une fente d'entrée qui est destinée au matérian en feuilles, et qui est délimitée d'un côté par une surface fixe de support (5), alignée avc ladite lame fixe, et de l'autre côté par au moins une pièce (6) qui est supportée de façon élastique et est sollicitée vers la surface de support.

2. Granulateur, selon la revendication 1, dans lequel la surface fixe de support (5) définit le côté inférieur de la fente.

3. Granulateur, selon la revendication 2, dans lequel la surface fixe de support (5) est horizontale.

4. Granulateur, selon la revendication 2 ou la revendication 3, dans lequel la surface fixe de support est rainurée ou perforée (comme en 10).

5. Granulateur, selon l'une quelconque des revendications précédentes, dans lequel la pièce (6) sollicitée de façon élastique est libre de se mouvoir dans une direction de telle manière que, lorsqu'elle s'éloigne de la surface de support (5), elle se rapproche aussi de l'axe du rotor.

6. Granulateur, selon l'une quelconque des revendications précédentes, dans lequel la pièce (6) sollicitée de façon élastique pivote autour d'un axe parallèle à la longueur da la fente.

7. Procédé de granulation de matériaux en feuilles, caractérisé par l'emploi d'un granulateur revendiqué selon l'une quelconque des revendications précédentes.

Fig.1.

Fig.2.

Fig.3.